# EUROPÄISCHE PATENTSCHRIFT

(11) **EP 2 955 999 B1**
(45) Veröffentlichungstag und Bekanntmachung des Hinweises auf die Patenterteilung: **11.01.2017**
(21) Anmeldenummer: 14705140.3
(22) Anmeldetag: 17.02.2014
(51) Int. Cl.: A01K 39/01

(54) **KÜKENFÜTTERUNGSANLAGE**
PULLET FEEDING STATION
DISPOSITIF DE DISTRIBUTION DE NOURRITURE POUR DES POUSSINS

(30) Priorität: 15.02.2013 DE 202013100686 U
(43) Veröffentlichungstag der Anmeldung: 23.12.2015
(73) Patentinhaber: Farmer Automatic GmbH & Co. KG, 48366 Laer (DE)
(72) Erfinder: KÜHLMANN, Franz, Josef, 48366 Laer (DE)
(74) Vertreter: Habbel, Ludwig
(86) Internationale Anmeldenummer: PCT/EP2014/053012
(87) Internationale Veröffentlichungsnummer: WO 2014/125106

(56) Entgegenhaltungen:
- DE-A1- 3 409 507
- US-A- 3 077 182
- US-A- 4 351 273

## Beschreibung

Die Erfindung betrifft eine Kükenfütterungsanlage nach dem Oberbegriff des Anspruchs 1.

Derartige Fütterungsanlagen sind aus der Praxis bekannt, vgl. US-A-4351273, US-A-3077182 und DE-A-3409507. Es kann vorkommen, dass Küken in den Trog gelangen und zusammen mit der Fördereinrichtung längs durch den Trog gefördert werden, also quasi auf der Fördereinrichtung "mitfahren". Um zu verhindern, dass die Küken dort verletzt werden, wo sich beispielsweise Trennwände in den Trog erstrecken, der Trog endet oder anderweitige Einbauten im Trog vorhanden sind, weisen die bekannten Kükenfütterungsanlagen so genannte Abweiser auf, die beispielsweise in der Art von schräg stehenden Zungen sich nach unten bis nahe an die Mitnehmer der Fördereinrichtung heran erstrecken, so dass die auf der Fördereinrichtung mitfahrenden Küken gegen den Abweiser gelangen und, da sich dieser in Förderrichtung nach oben ansteigend erstreckt, angehoben werden, so dass die Küken von sich aus den Trog verlassen können.

Die tiefste Stelle bis zu welcher sich ein Abweiser nach unten in den Trog hineinerstrecken kann, ist durch die Geometrie der Mitnehmer bestimmt: Eine Kollision zwischen den Mitnehmern und den Abweisern ist zu vermeiden. Für die Wirksamkeit der Fördereinrichtung ist eine gewisse Mindesthöhe der Mitnehmer vorteilhaft, jedoch ergibt sich mit zunehmender Höhe der Mitnehmer ein dementsprechend größer werdender Spalt zwischen dem Grund des Troges und dem unteren Ende der Abweiser, und bei Überschreitung einer gewissen Spalthöhe ist nicht auszuschließen, dass trotz der Abweiser Küken in diesem Spalt hängen bleiben können und sich nicht von allein aus dem Trog befreien können.

Der Erfindung liegt die Aufgabe zugrunde, eine gattungsgemäße Kükenfütterungsanlage dahingehend zu verbessern, dass diese einen möglichst sicheren Schutz für die Küken, sowie eine optimale Zugänglichkeit zum Futter für die Küken und eine hohe Leistungsfähigkeit der Fördereinrichtung ermöglicht.

Diese Aufgabe wird durch eine Kükenfütterungsanlage mit den Merkmalen des Anspruchs 1 gelöst. Vorteilhafte Ausgestaltungen sind in den Unteransprüchen beschrieben.

Die Erfindung schlägt mit anderen Worten vor, oberhalb der Mitnehmer zwei oder mehr so genannte Träger vorzusehen, die sich in Längsrichtung des Troges erstrecken. Die Träger sind vorschlagsgemäß derart angeordnet, dass an jeden Abweiser ein Träger heranreicht.

Durch die vorschlagsgemäße Ausgestaltung der Kükenfütterungsanlage ergibt sich ein optimaler Schutz für die Küken, denn der Abstand zwischen dem untersten Ende eines Abweisers und dem Grund des Troges, also der durch die Mitnehmer erzwungene Spalt, spielt für die Sicherheit der Küken keine Rolle: Dadurch, dass oberhalb der Mitnehmer wenigstens zwei Träger verlaufen, können die Küken nicht in diesen Spalt, also bis zum Troggrund gelangen und sich in diesem Spalt zwischen Troggrund und dem untersten Ende eines Abweisers verfangen. Eine optimale Zugänglichkeit zum Futter ist für die Küken dadurch ermöglicht, dass zwei oder mehr derartige Träger vorgesehen sind. Auf diese Weise können die Träger mit einem vergleichsweise kleinen Querschnitt ausgestaltet sein, so dass der Innenraum des Troges durch diese Träger nicht zum großen Teil ausgefüllt wird und dementsprechend im Innenraum des Troges eine große Oberfläche bereitgestellt wird, an welcher das Futter zugänglich ist. Dabei wird für die Fütterungsanlage eine hohe Wirksamkeit der Fördereinrichtung dadurch sichergestellt, dass deren Mitnehmer eine hohe förderwirksame Bauhöhe aufweisen können, denn, wie bereits erwähnt, ist der sich aus dieser Bauhöhe ergebende Spalt zwischen dem Trogboden und den Abweisern für die Sicherheit der Küken praktisch ohne Belang.

Die Träger bieten ähnlich wie eine Sitzstange den Küken die Möglichkeit im Trog zu stehen, ohne auf den sich bewegenden Elementen der Fördereinrichtung zu stehen, so dass die Küken an praktisch jeder Stelle des Troges den Trog wieder verlassen können. Werden die Küken jedoch in Längsrichtung des Troges bewegt, so geraten sie gegen die Abweiser und werden durch die Träger, die bis an die Abweiser heranreichen, davor bewahrt, sich zwischen der Unterkante eines Abweisers und dem Trogboden bzw. einem Mitnehmer zu verfangen. Selbst wenn ein Fuß eines Kükens zwischen den Abweiser und dem Troggrund bzw. zwischen den Abweiser und einem Mitnehmer der Fördereinrichtung gelangt, kann das Küken problemlos auf den Träger gelangen und sich befreien, so dass es im nächsten Schritt dann ebenso problemlos aus dem Trog gelangen kann.

Vorteilhaft kann jeder Abweiser eine Öffnung aufweisen, durch die hindurch sich ein Träger erstreckt. Auf diese Weise wird eine problemlose Fertigung der Kükenfütterungsanlage ermöglicht, und insbesondere wird auch eine Nachrüstung vorhandener Kükenfütterungsanlagen mit den vorschlagsgemäß vorgesehenen Trägern ermöglicht, ohne dass hierzu genau Maß genommen werden muss, wie dies beispielsweise erforderlich wäre, wenn die Träger passgenau an die Abweiser anschließen müssten. Vielmehr ergibt sich dadurch, dass ein Träger sich durch den

Abweiser erstreckt, eine Art Toleranzausgleich, so dass der Träger mit einem gewissen Übermaß bereitgestellt werden kann und sich dann einfach nur entsprechend weit über den Abweiser hinauserstreckt. Auf diese Weise ist eine schnelle und unkomplizierte Montage der Träger ebenso möglich, wie deren möglichst wirtschaftliche Fertigung in vorgegebenen, standardisierten Längen, die nicht speziell an die jeweilige millimetergenau abgemessene Situation einer vorhandenen Kükenfütterungsanlage angepasst sein müssen.

Vorteilhaft kann vorgesehen sein, dass die Abweiser als gebogene Drahtbügel ausgestaltet sind. Auf diese Weise ergibt sich automatisch ein Freiraum, durch den wie erwähnt ein Träger gesteckt werden kann. Zudem ergibt sich eine vergleichsweise offene Ausgestaltung des Abweisers, so dass dieser bezogen auf seine mechanische Stabilität ein vergleichsweise geringes Gewicht aufweist im Vergleich zu einem Abweiser, der aus einem vollen Plattenmaterial gefertigt wäre. Zudem ergibt sich, insbesondere wenn ein Draht mit einem runden Profilquerschnitt verwendet wird, eine verletzungssichere Ausgestaltung des Abweisers ohne scharfe Kanten. Während ein aus einem Blech ausgeschnittener Abweiser im Interesse der Kükensicherheit an den Kanten ggf. nachbearbeitet werden müsste.

Vorteilhaft können die Träger lösbar befestigt sein. Auf diese Weise ergibt sich einerseits eine rasche und preisgünstige Montage der Träger, sei es bei der neuen Herstellung oder bei der Nachrüstung einer Kükenfütterungsanlage. Durch die lösbare Befestigung ergibt sich zudem die Möglichkeit, die Träger schnell und preisgünstig zu demontieren, beispielsweise bei Beschädigungen, oder wenn die Kükenfütterungsanlage umgerüstet werden soll. Beispielsweise kann es für die Fütterung von älteren Küken vorgesehen sein, einen möglichst großen Querschnitt des Troges mit Futter zu füllen, so dass im Interesse dieser Futtermenge die Träger aus dem Trog entfernt werden können. Gerade bei den größeren Küken kann nämlich die Problematik nicht mehr vorliegen, dass diese bereits älteren Küken in einen Spalt zwischen den Abweisern und dem Troggrund bzw. zwischen den Abweisern und einem Mitnehmer geraten können, weil diese ältere Tiere problemlos selbst aus einer solchen Situation befreien können bzw. eine solche Situation von vornherein vermeiden können.

Vorteilhaft kann vorgesehen sein, dass der Träger eine Öse bildet, mit welcher er auf einen Halter aufgefädelt ist, der dementsprechend zur Aufnahme der Öse als Stift ausgestaltet ist. Eine solche Befestigung eines Trägers ermöglicht eine sehr schnelle und werkzeuglose Montage bzw. Demontage des Trägers. Dabei kann insbesondere vorteilhaft vorgesehen sein, dass der Träger lediglich eine einzige Öse aufweist, so dass auch hier im Interesse des bereits angesprochenen Toleranzausgleichs keine genaue Abstimmung auf ein vorgegebenes Abstandsmaß notwendig ist.

Vorteilhaft kann die Anordnung von Traversen vorgesehen sein, die in bestimmten Abständen den Trog überspannen. Wenn sich die Kükenfütterungsanlage beispielsweise durch eine Käfiganlage mit mehreren Abschnitten erstreckt, so können diese Abschnitte jeweils zur Aufnahme einer bestimmten Population an Küken vorgesehen sein. Um eine Durchmischung dieser Populationen zu vermeiden, kann dort wo die einzelnen Abschnitte der Käfiganlage aneinander grenzen, eine Traverse im Trog der Fütterungsanlage vorgesehen sein, so dass mittels der Traverse die einzelnen Abschnitte der Käfiganlage voneinander getrennt werden und verhindert wird, dass ein Küken innerhalb der Kükenfütterungsanlage von einem zum benachbarten Abschnitt der Käfiganlage gelangt. Zu diesem Zweck kann vorgesehen sein, dass die Abweiser jeweils an einer solchen Traverse gehalten sind. Zudem kann vorgesehen sein, dass an derselben Traverse ein Halter vorgesehen ist, an dem ein Träger gehalten ist. Die Traverse stellt also auf der einen Seite diesen Halter bereit, an dem ein Träger gehalten ist und stellt andererseits einen Abweiser bereit, zu welchem sich ein anderer Träger eines benachbarten Abschnitts des Troges erstreckt. Durch diese Ausgestaltung der Kükenfütterungsanlage sind keine zusätzlichen Befestigungselemente am Trog der Fütterungsanlage erforderlich, sondern vielmehr kann durch die ohnehin vorgesehenen Traversen auch gleich die Montage der Träger ermöglicht werden.

Vorteilhaft kann die Förderung des Futters mittels eines Kettenförderers erfolgen. Dabei verläuft in an sich bekannter Weise die Förderkette mittig im Trog und zu beiden Seiten der Förderkette erstrecken sich die Mitnehmer. In an sich bekannter Weise ist dabei vorgesehen, dass auf beiden Seiten der Förderkette jeweils ein Abweiser angeordnet ist und dementsprechend auch jeweils ein vorschlagsgemäß vorgesehener Träger.

Die Träger sind als Träger bezeichnet, da sie es ermöglichen sollen, dass ein Küken auf einem solchen Träger steht und folglich von diesem Träger getragen wird, so dass auf diese Weise das Küken nicht notwendigerweise mitsamt der Fördereinrichtung in Längsrichtung des Troges bewegt wird. Die Träger können daher beispielsweise in Form von gespannten Seilen ausgestaltet sein. Vorteilhaft jedoch sind die Träger als Stäbe ausgestaltet, also als eigensteife längliche Elemente, die in erheblich geringerem Umfang durchhängen bzw. sich durchbiegen als dies beispielsweise bei einem Seil der Fall wäre. Insbesondere sind keine hohen Spannkräfte erforderlich, wie sie ansonsten zur Straffung eines Seiles erforderlich wären, so dass die mechanische Belastung der Kükenfütterungsanlage möglichst gering gehalten werden kann.

Vorteilhaft können die Träger einen gerundeten Querschnitt aufweisen, so dass scharfe Kanten oder Ecken vermieden werden, mit denen die Küken in Kontakt geraten könnten und die ansonsten möglicherweise ein Verletzungsrisiko für die Küken darstellen könnten.

Vorteilhaft kann vorgesehen sein, dass zwei Abweiser nebeneinander angeordnet sind, so dass über die gesamte Trogbreite die Wirkung der Abweiser auch dann sichergestellt ist, wenn diese nicht als breite Zungen aus Flachmaterial ausgestaltet sind, sondern aus schmalerem Material, beispielsweise aus Drahtmaterial, bestehen.

Bei dieser Anordnung zweier Abweiser nebeneinander ist bewusst ein so großer Abstand zwischen den Abweisern vorgesehen, dass ein schmaler Spalt vermieden wird, in denen die Küken beispielsweise mit ihren Beinen hängen bleiben könnten. Dieser Abstand kann vorteilhaft nach oben hin zunehmen. Dadurch ist sichergestellt, dass auch größere bzw. ältere Küken ihre Füße aus dem Zwischenraum zwischen den beiden Abweisern befreien können, falls sie zwischen die Abweiser geraten sein sollten. Andererseits ist der Abstand auch an seiner breiteren Stelle so klein bemessen, dass die kleineren Küken nicht mit ihrem Körper zwischen den Abweisern hindurch nach unten fallen können. Das richtige Abstandsmaß kann in einer ersten Ausgestaltung aufgrund von Erfahrungswerten gewählt werden und werkseitig fest vorgegeben sein, indem die beiden Abweiser in diesem Abstand zueinander montiert sind. In einer zweiten Ausgestaltung kann es einstellbar sein, beispielsweise in Anpassung an die örtlichen Verhältnisse, z. B. Alter bzw. Größe der Küken. Somit kann das Abstandsmaß vom Betreiber der Kükenfütterungsanlage eingestellt werden, indem die beiden Abweiser verstellbar an einer Traverse befestigt sind, beispielsweise verschraubt sind, und ihr Abstand zueinander nach Lösen der Schrauben geändert werden kann.

Ausführungsbeispiele der Erfindung werden anhand der rein schematischen Darstellungen nachfolgend näher erläutert. Dabei zeigt
- Fig. 1: eine perspektivische Ansicht auf einen Abschnitt einer Kükenfütterungsanlage im Bereich einer Traverse, wobei die mit Abweisern versehene Seite der Traverse dargestellt ist,
- Fig. 2: eine ebenfalls perspektivische Ansicht auf die gegenüberliegende Seite der Traverse, wo Halter für die Träger vorgesehen sind, die
- Fig. 3 u. 4: Ansichten auf ein als gebogener Draht ausgestaltetes Kombinationsbauteil, welches sowohl Abweiser als auch Halter bildet, und
- Fig. 5: eine perspektivische Ansicht auf ein weiteres Ausführungsbeispiel eines Kombinationsbauteils.

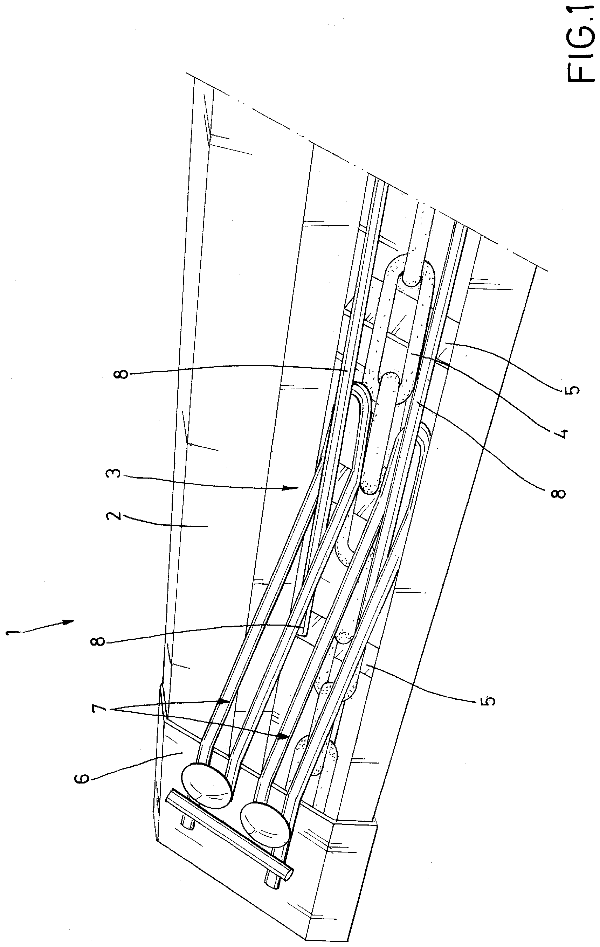

In den Zeichnungen ist mit 1 insgesamt eine Kükenfütterungsanlage bezeichnet, von der lediglich ein Ausschnitt dargestellt ist. Die Kükenfütterungsanlage 1 weist einen Trog 2 auf, der als längliche Rinne ausgestaltet ist und in welchem eine Fördereinrichtung 3 vorgesehen ist, die als Kettenförderer mit einer Förderkette 4 und mehreren Mitnehmern 5 ausgestaltet ist. Am linken Bildrand der Fig. 1 ist eine Traverse 6 ersichtlich, die sich quer über den Trog 2 erstreckt und an welcher zwei Abweiser 7 gehalten sind, die sich schräg nach unten bis über die Mitnehmer 5 erstrecken.

Die beiden Abweiser 7 sind jeweils als Drahtbügel aus einem Rundstahl gefertigt und durch den Abstand der beiden Abweiser 7 zueinander sowie jeweils zu der benachbarten Wand des Troges 2 ergeben sich im Bereich der Abweiser 7 so schmale Spalten in Förderrichtung, dass im Bereich dieser Abweiser 7 Küken zuverlässig aufgehalten werden. Die Förderrichtung verläuft dabei im Bild der Fig. 1 von rechts unten nach links oben.

Zwischen den beiden Abweisern 7 bildet die Förderkette 4 selbst eine Sicherheitseinrichtung, die es verhindert, dass Küken, z. B. mit ihren Füßen, unter die Abweiser 7 gelangen können.

Beiderseitig neben der Förderkette 4 erstreckt sich jeweils ein Träger 8, der als Stahldraht mit einem kreisrunden Querschnittsprofil ausgestaltet ist, wobei sich jeder Träger 8 bis hinter einen Abweiser 7 erstreckt, so dass ein Träger 8 nicht nur an einen Abweiser 7 heranreicht, sondern auch über den Abweiser 7 in Förderrichtung hinausragt. Dadurch, dass die Abweiser 7 als gebogene Drahtbügel ausgestaltet sind, schaffen sie jeweils eine Öffnung, durch die sich der jeweilige Träger 8 erstreckt.

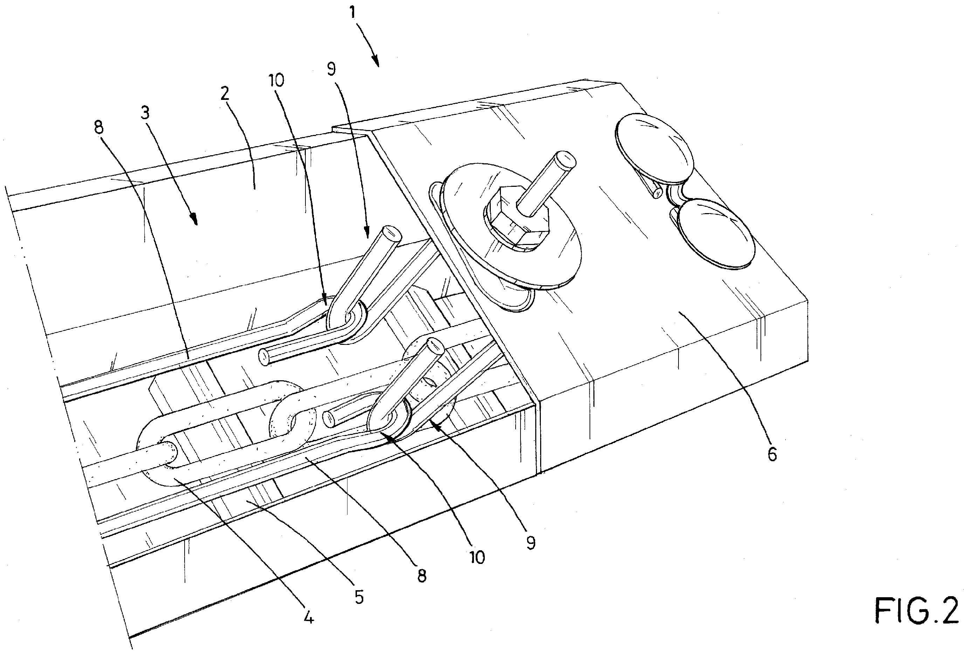

Fig. 2 zeigt die Traverse 6 von der anderen, in Förderrichtung gegenüberliegenden Seite oder auch eine Traverse 6, die in Förderrichtung vor der aus Fig. 1 ersichtlichen Traverse 6 angeordnet ist. Auf ihrer in Förderrichtung hinteren Seite weist die Traverse 6 jedenfalls zwei Halter 9 auf, die jeweils als Stift ausgestaltet sind, auf welchen ein Träger 8 aufgefädelt ist, wobei die beiden dargestellten Träger 8 zu diesem Zweck jeweils eine Öse 10 bilden.

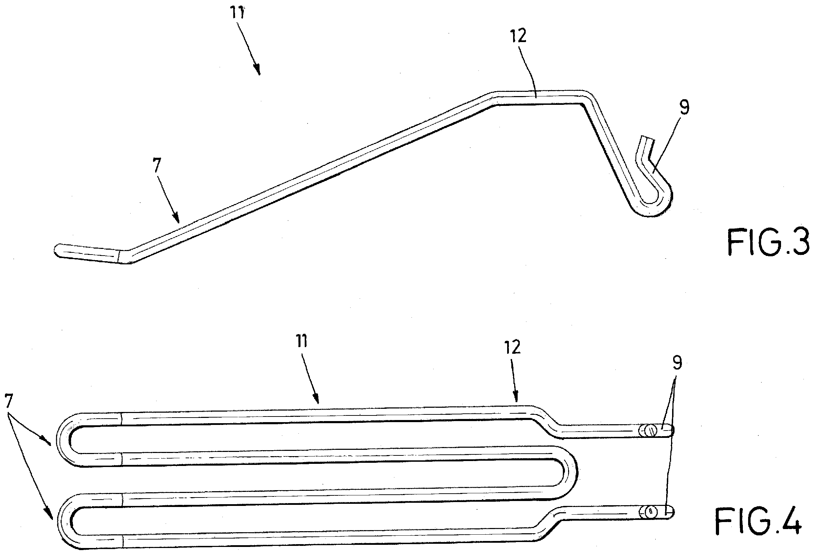

Fig. 3 zeigt einen gebogenen Draht in Seitenansicht, der als Kombinationsbauteil 11 ausgestaltet ist und einerseits zwei Abweiser 7 bildet, andererseits zwei Halter 9 und zwischen diesen Abweisern 7 und Haltern 9 einen Montageabschnitt 12, an welchem das Kombinationsbauteil 11 beispielsweise mit einer Traverse 6 verschraubt werden kann.

Fig. 4 zeigt das Kombinationsbauteil 11 der Fig. 3 in Draufsicht.

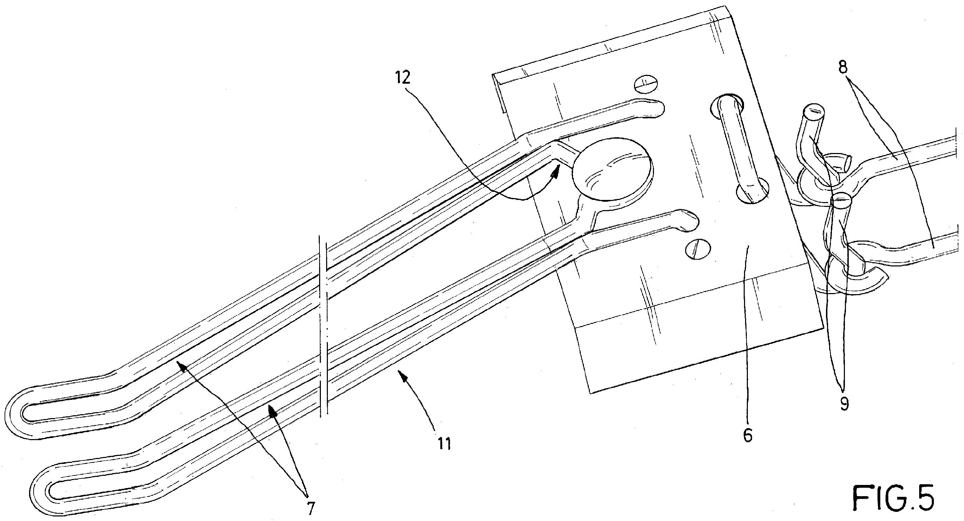

Fig. 5 zeigt ein weiteres Ausführungsbeispiel eines Kombinationsbauteils 11 in perspektivischer Ansicht. Auch bei diesem Ausführungsbeispiel sind Träger 8 an dem Kombinationsbauteil 11 gehalten, welches seinerseits an einer Traverse 6 festgelegt ist. Auch bei diesem Ausführungsbeispiel besteht das Kombinationsbauteil 11 aus einem gebogenen Draht. Im Unterschied zu dem Ausführungsbeispiel der Fig. 3 erweitert sich der Abstand, den die beiden Abweiser 7 zwischen sich aufweisen, nach oben hin.

## Patentansprüche

1. Kükenfütterungsanlage (1),
mit einem länglichen, das Futter aufnehmenden Trog (2), einer in dem Trog (2) längsbeweglichen Fördereinrichtung (3), die eine Vielzahl von Mitnehmern (5) aufweist,
und mit Abweisern (7), die sich vom Inneren des Troges (2) nach oben erstrecken und dabei in Förderrichtung ansteigend verlaufen,
**dadurch gekennzeichnet,**
**dass** in dem Trog (2) oberhalb der Mitnehmer (5) wenigstens zwei Träger (8) vorgesehen sind, die sich in Längsrichtung des Troges (2) erstrecken, wobei die Träger (8) derart angeordnet sind, dass an jeden Abweiser (7) ein Träger (8) heranreicht.

2. Kükenfütterungsanlage nach Anspruch 1,
**dadurch gekennzeichnet,**
**dass** jeder Abweiser (7) eine Öffnung aufweist, durch welche sich ein Träger (8) hindurch erstreckt.

3. Kükenfütterungsanlage nach Anspruch 1 oder 2,
**dadurch gekennzeichnet,**
**dass** die Abweiser (7) als aus Draht gebogene Bügel ausgestaltet sind.

4. Kükenfütterungsanlage nach einem der vorhergehenden Ansprüche,
**dadurch gekennzeichnet,**
**dass** die Träger (8) lösbar befestigt sind.

5. Kükenfütterungsanlage nach Anspruch 4,
**dadurch gekennzeichnet,**
**dass** ein Träger (8) eine Öse (10) bildet, mit welcher er auf einen als Stift ausgestalteten Halter (9) aufgefädelt ist.

6. Kükenfütterungsanlage nach einem der vorhergehenden Ansprüche,
**dadurch gekennzeichnet,**
**dass** die Abweiser (7) jeweils an einer den Trog (2) überspannenden Traverse (6) gehalten sind,
und **dass** an der Traverse (6) auf deren einem Abweiser (7) gegenüberliegenden Seite ein Halter (9) vorgesehen ist, an dem ein Träger (8) gehalten ist.

7. Kükenfütterungsanlage nach einem der vorhergehenden Ansprüche,
**dadurch gekennzeichnet,**
**dass** die Fördereinrichtung (3) als Kettenförderer ausgestaltet ist,
deren Förderkette (4) mittig im Trog (2) verläuft, und, über die Breite des Troges (2) gesehen, beiderseits der Förderkette (4) jeweils ein Abweiser (7) sowie ein Träger (8) angeordnet ist.

8. Kükenfütterungsanlage nach einem der vorhergehenden Ansprüche,
**dadurch gekennzeichnet,**
**dass** die Träger (8) als Stäbe ausgestaltet sind.

9. Kükenfütterungsanlage nach Anspruch 8,
**dadurch gekennzeichnet,**
**dass** die Träger (8) einen gerundeten Querschnitt aufweisen.

10. Kükenfütterungsanlage nach einem der vorhergehenden Ansprüche,
**dadurch gekennzeichnet,**
**dass** zwei Abweiser (7) nebeneinander angeordnet sind und einen Abstand zwischen sich aufweisen,
wobei der Abstand nach oben hin zunimmt.

## Claims

1. Device for feeding chicks (1),
comprising an elongated trough (2) that can receive the feed, a conveying device (3) moving in a lengthwise direction inside the trough, which conveying device has a number of pusher plates (5), and deflectors (7) which extend upwards from the inside of the trough (2) and rise gradually in the conveying direction, **characterised in**
**that** at least two supports (8) are provided in the trough (2) above the pusher plates (5), which supports extend along the length of the trough (2), where the supports (8) are arranged in such a way that a support (8) touches each deflector (7).

2. Device for feeding chicks in accordance with claim 1, **characterised in that** each deflector (7) has an opening, through which a support (8) passes.

3. Device for feeding chicks in accordance with claim 1 or claim 2, **characterised in that** the deflectors (7) consist of wire which is bent to shape.

4. Device for feeding chicks in accordance with any of the above claims, **characterised in that** the supports (8) are fixed detachably in position.

5. Device for feeding chicks in accordance with claim 4, **characterised in that** the support (8) is bent to form an eye (10) with which it can hooked onto holder (9) in the form of a pin.

6. Device for feeding chicks in accordance with any of the above claims, **characterised in that** each of the deflectors (7) is held on a cross-piece (6) spanning the width of the trough (2) and that on the cross-piece (6) on the side of which opposite a deflector (7), a holder (9) is provided on which a support (8) is held in position.

7. Device for feeding chicks in accordance with any of the above claims, **characterised in that** the conveying device (3) is designed as a chain conveyor, whose chain (4) passes along the centre of the trough (2) and, viewed across the width of the trough (2) a deflector (7) and a support (8) are arranged on either side of the conveyor chain (4).

8. Device for feeding chicks in accordance with any of the above claims, **characterised in that** the supports (8) are formed as rods.

9. Device for feeding chicks in accordance with claim 8, **characterised in that** the supports (8) have a rounded cross-section.

10. Device for feeding chicks in accordance with any of the above claims, **characterised in that** two deflectors (7) are arranged beside one another at a distance which increases towards the top.

## Revendications

1. Nourrisseur pour poussins (1),
comprenant une auge (2) oblongue recevant la nourriture, un équipement de convoyage (3) mobile longitudinalement dans l'auge (2) et présentant un grand nombre de taquets entraîneurs (5), et avec des déflecteurs (7) qui s'étendent de l'intérieur de l'auge (2) vers le haut, et qui vont en montant dans le sens du convoyage, **caractérisé en ce que**
sont prévus dans l'auge (2), au-dessus des taquets entraîneurs (5), au moins deux supports (8) qui s'étendent dans le sens longitudinal de l'auge (2), sachant que les supports (8) sont agencés de telle manière qu'un support (8) s'approche de chaque déflecteur (7).

2. Nourrisseur pour poussins selon la revendication 1, **caractérisé en ce que** chaque déflecteur (7) présente un orifice à travers lequel s'étend un support (8).

3. Nourrisseur pour poussins selon la revendication 1 ou 2, **caractérisé en ce que** les déflecteurs (7) sont configurés en étriers en fil métallique incurvé.

4. Nourrisseur pour poussins selon l'une des revendications précédentes, **caractérisé en ce que** les supports (8) sont fixés de manière détachable.

5. Nourrisseur pour poussins selon la revendication 4, **caractérisé en ce qu'**un support (8) forme un oeillet (10) avec lequel il est enfilé comme fixation (9) configurée en tige.

6. Nourrisseur pour poussins selon l'une des revendications précédentes, **caractérisé en ce que** les déflecteurs (7) sont respectivement retenus contre une traverse (6) s'étendant au-dessus de l'auge (2), et **en ce que** contre la traverse (6), sur son côté faisant face à un déflecteur (7), est prévue une fixation (9) contre lequel est retenu un support (8).

7. Nourrisseur pour poussins selon l'une des revendications précédentes, **caractérisé en ce que** l'équipement convoyeur (3) est configuré en convoyeur à chaîne dont la chaîne convoyeuse (4) circule centrée dans l'auge (2) et que de chaque côté de la chaîne convoyeuse (4) est agencé, sur la largeur de l'auge (2), un déflecteur (7) ainsi qu'un support (8).

8. Nourrisseur pour poussins selon l'une des revendications précédentes, **caractérisé en ce que** les supports (8) sont configurés en barres.

9. Nourrisseur pour poussins selon la revendication 8, **caractérisé en ce que** les supports (8) présente une section arrondie.

10. Nourrisseur pour poussins selon l'une des revendications précédentes, **caractérisé en ce que** deux déflecteurs (7) sont agencés l'un à côté de l'autre et présentent un écart entre eux, sachant que l'écart augmente vers le haut.
